# EUROPEAN PATENT SPECIFICATION

(11) **EP 1 674 792 B1**
(45) Date of publication and mention of the grant of the patent: **11.02.2009**
(21) Application number: 05016604.0
(22) Date of filing: 29.07.2005
(51) Int. Cl.: F21V 21/30, B60Q 3/00, F16M 11/14

(54) **Swivel support, eg. for lights**
Schwenkbares Trageelement, zB. für Leuchte
Support orientable, par exemple pour lumières

(30) Priority: 23.12.2004 IT FI20040269
(43) Date of publication of application: 28.06.2006
(73) Proprietor: Pini, Belisario, 50141 Firenze (IT)
(72) Inventor: Pini, Belisario, 50141 Firenze (IT)
(74) Representative: Strasser, Wolfgang

(56) References cited:
- DE-A1- 19 914 127
- GB-A- 1 181 888
- US-A- 4 636 924
- US-A- 5 183 330
- US-A- 5 377 087
- US-A- 5 404 297
- US-B1- 6 193 395

## Description

The present invention concerns a swivel container support, especially, though not exclusively, for lighting devices and optic devices.

Supports or containers for lighting fixtures that can be oriented in space are known. However, due to the complexity of realisation, assembly and installation of these known devices, and due to their relatively high cost, their diffusion is still fairly limited.

US 5404297 discloses a lighting apparatus includes a housing and a lamp support assembly that is normally retained in but removable from the housing. The lamp support assembly includes coaxial inner and outer sleeves, and a lamp socket mounted on one of the sleeves. The inner sleeve is movable relative to the outer sleeve between a braced position in which the lamp support assembly is retained in the housing, and a released position in which the lamp support assembly is released for removal from the housing. A lamp is received in the socket, and the inner sleeve is biased toward the braced position when the lamp support assembly is positioned in the housing so that the lamp support assembly is retained in the housing.

The main aim of the present invention is to overcome the above-mentioned inconveniences.

This result is achieved, in conformity with the present invention, by adopting the idea of realising a container support having the characteristics described in claim 1. Other characteristics of the invention are the object of the dependent claims.

A container support according to the present invention is simple, economic and reliable to make, assemble and install, even after a prolonged period of use, it is lightweight, may be made of plastic or of an electrically insulating material, and allows an ample range of orientation in space of the 'object that it supports or contains.

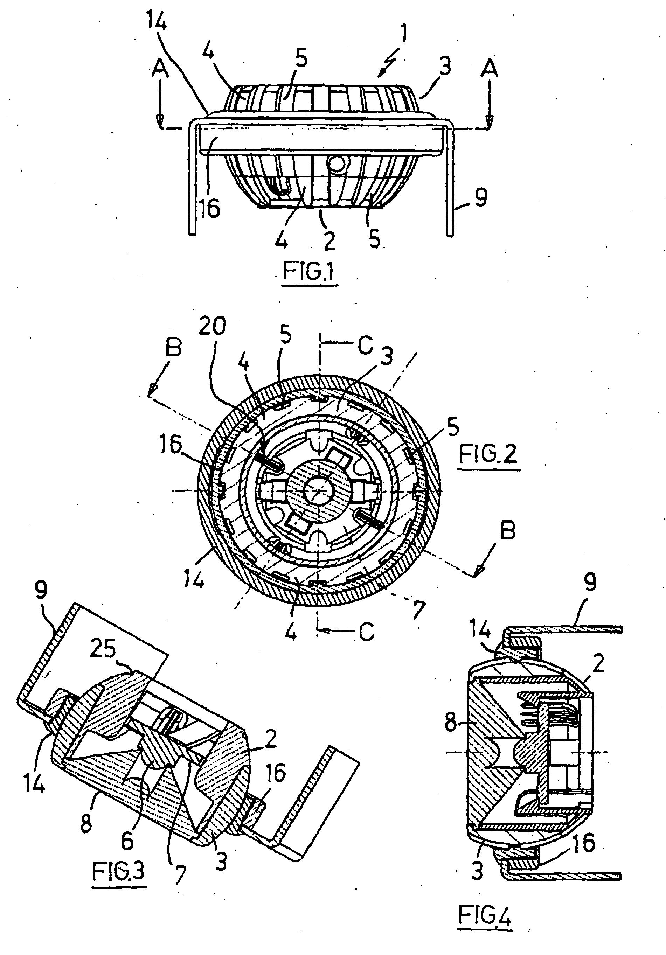

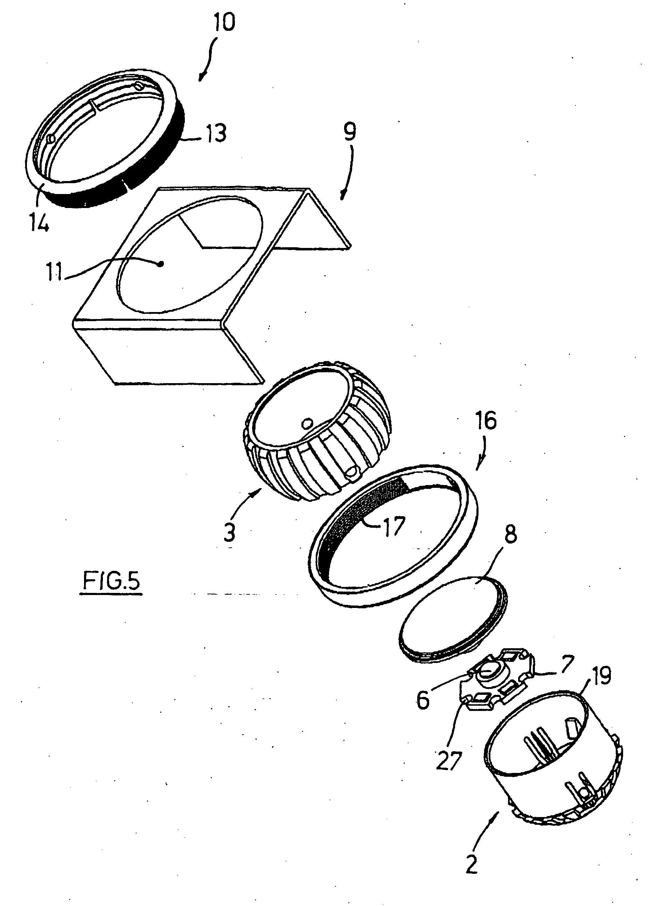

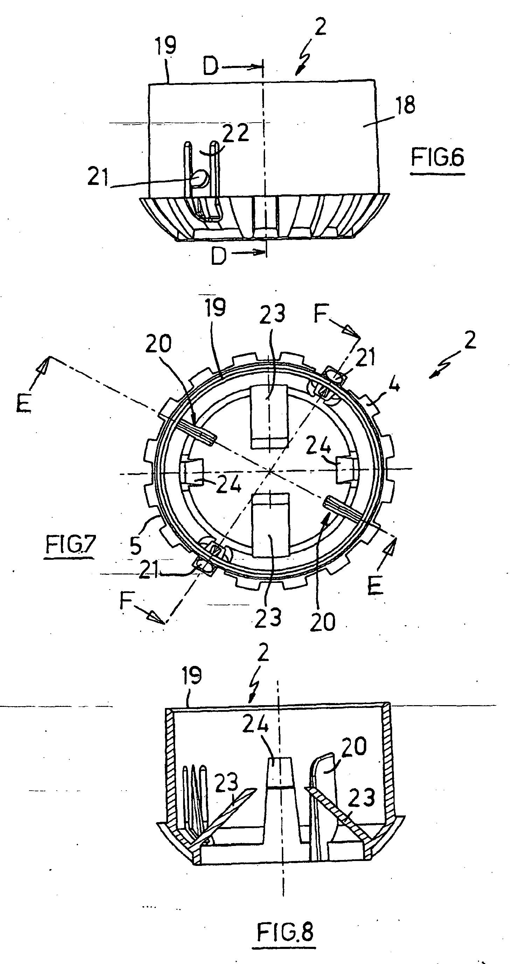

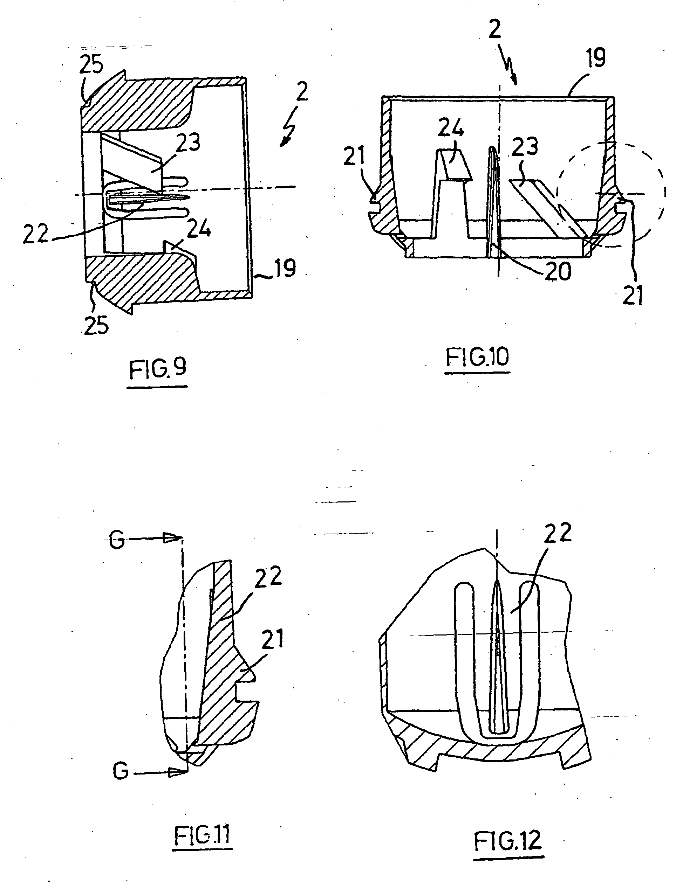

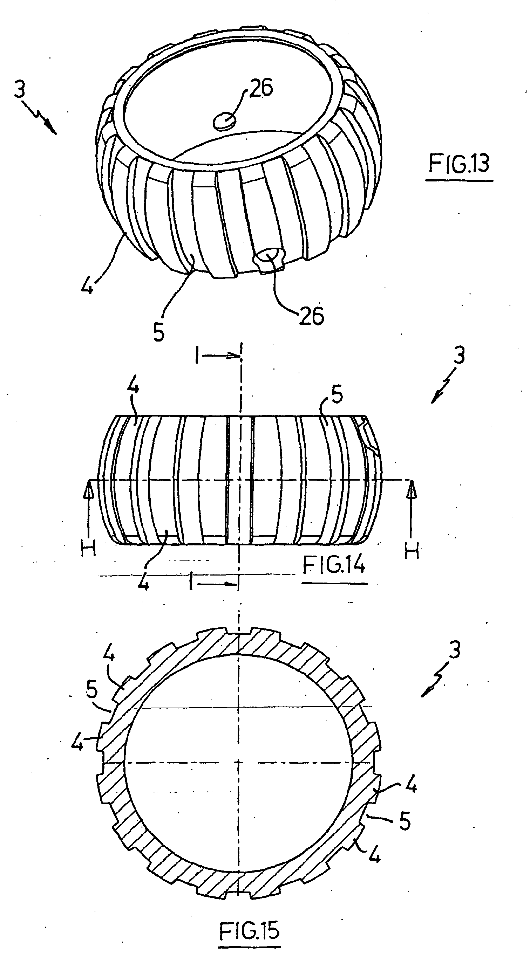

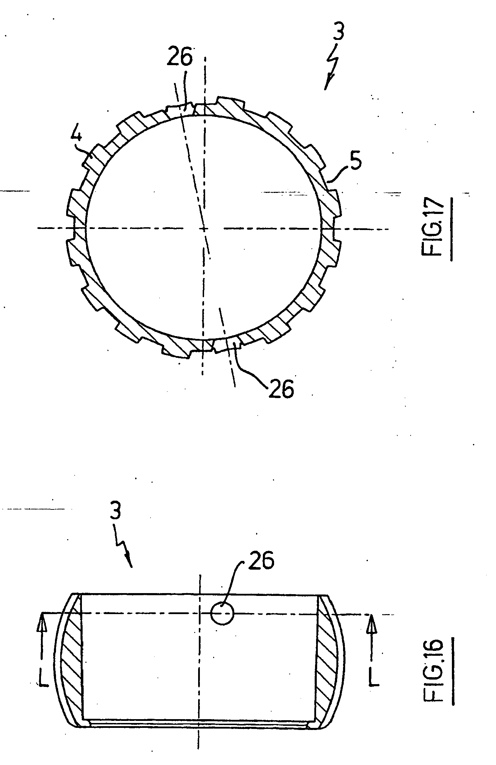

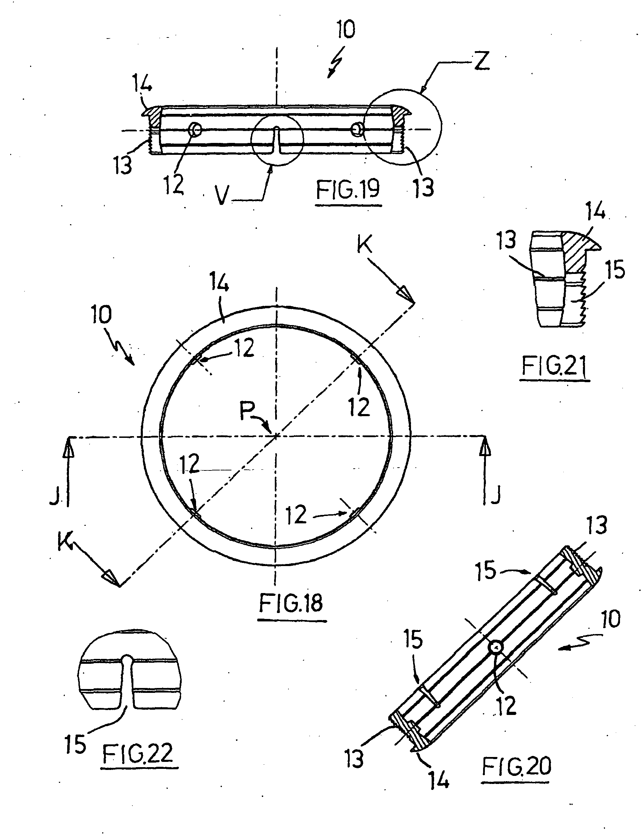

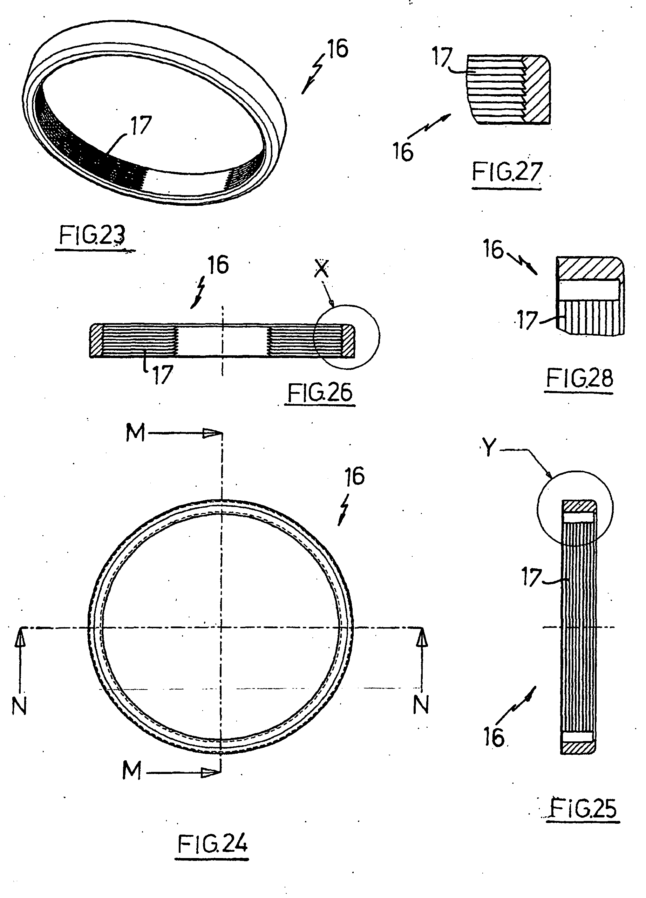

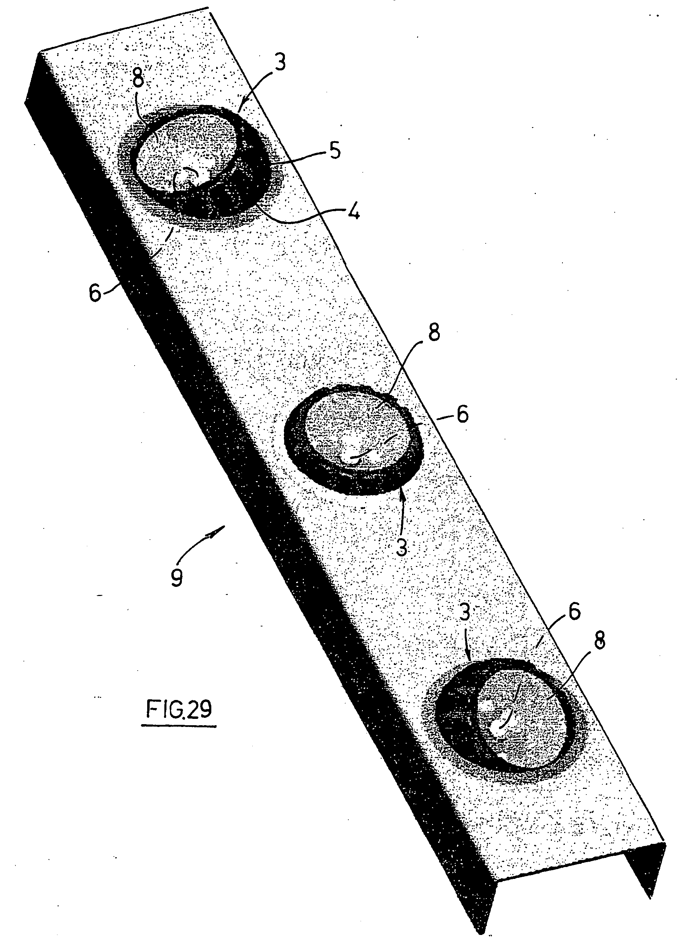

These and other advantages and characteristics of the present invention will be better understood by any technician in the field from the following description, with the aid of the enclosed drawings, given here simply as a practical example of the invention, but without limiting it in any sense, in which: Fig.1 shows a side view of a container support in conformity with the invention, fitted on a channel frame; Fig.2 shows a section view along the line A-A in Fig.1; Fig.3 shows a section view along the line B-B in Fig.2; Fig.4 shows a section view along the line C-C in Fig.2; Fig.5 shows an exploded perspective view of the device in Fig.1; Fig.6 shows a side view of the base element of the container support in Fig.1; Fig.7 shows an overhead view of the element in Fig.6; Fig.8 shows a section view along the line D-D in Fig.6; Fig.9 shows a section view along the line E-E in Fig.7; Fig.10 shows a section view along the line F-F in Fig.7; Fig.11 shows an enlargement of the detail circled in Fig.10; Fig.12 shows a section view along the line G-G in Fig.11; Fig.13 shows a perspective view of the closing element of the container support in Fig.1; Fig.14 shows a side view of the element in Fig.13; Fig.15 shows a section view along the line H-H in Fig.14; Fig.16 shows a section view along the line I-I in Fig.14; Fig.17 shows a section view along the line L-L in Fig.16; Fig.18 shows an overhead view of the articulation; Fig.19 shows a section view along the line J-J inFig.18; Fig.20 shows a section view along the line K-K in Fig.18; Fig.21 shows an enlargement of the detail "Z" in Fig. 19; Fig.22 shows an enlargement of the detail "V" in Fig.19; Fig.23 shows a perspective view of the ring for fixing the device; Fig.24 shows a PLANview of the ring in Fig.23; Fig.25 shows a section view along the line M-M in Fig.24; Fig.26 shows a section view along the line N-N in Fig.24; Fig.27 shows an enlargement of the detail "X" in Fig.26; Fig.28 shows an enlargement of the detail "Y" in Fig.25; Fig.29 shows a set of three independent container supports in conformity with the invention, fitted on the same channel frame.

The following description will refer, as a non limitative example, to a swivel lighting device.

Reduced to its basic structure and reference being made to the figures of the enclosed drawings, a container support according to the present invention comprises: - a container body (1) with an external surface in the shape of a spherical bowl, in which is housed a lamp with a led (6) with respective dissipator (7) and a lens (8) above, and which is composed of a base element (2) and of a closing element (3) above it, the external surface of said body (1) being provided with a series of equidistant meridian teeth (4), between which are corresponding grooves (5) the bottom of which is defined by a corresponding portion or strip of spherical surface; - means, including a spherical articulation, for fixing said body (1) to a fixed support, for example a channel frame (9) made of metal or plastic.

Said body (1) is composed of two elements (2, 3) to facilitate assembly operations. Said teeth (4) and said grooves (5) are defined in cooperation by the two elements (2, 3) that make up the body (1).

Advantageously, according to the invention, said means for fixing the body (1) to the channel (9) comprise a ring-shaped element (10) intended to be fitted in a corresponding hole (11) presented by the channel (9) and internally provided with four angularly equidistant radial appendices (12). In other words, said appendices are short cylindrical elements set at 90° from one another. The longitudinal axes of said appendices (12) intersect in a point (P) corresponding to the geometrical centre of the body (1). As better described below, said appendices (12) are intended to engage four corresponding grooves (5) in the body (1).

The external side surface of said ring (10) is provided with circumferential parallel ridges having a saw-toothed profile (13).

Moreover, advantageously, said ring (10) presents an upper ring-shaped edge (14) destined to rest on the edge of the hole (11) of said channel (9).

Said ring-shaped element (10) may be made of plastic material with the moulding technique; in that case it is moulded on a spherical seat, so it presents four shakeout openings (15) which, with the aid of the band (16) described below, are subject to closing in the operative or using condition of the system so that the side surface of the ring-shaped element (10) substantially assumes the shape of a spherical band.

The internal surface of said ring-shaped band (16) is provided, on the inside, with circumferential ridges (17) corresponding to those (13) presented by the external side surface of the ring (10).

Advantageously, according to the invention, the base element (2) of said container body (1) presents an axial tubular appendix (18) on the upper edge (19) of which the lens (8) rests. Said tubular appendix (18) is provided with two internal radial teeth (20), situated in diametrically opposite positions, which teeth (20) act as a guide for positioning the dissipator (7) of the lamp (6).

Moreover, said tubular appendix (18) has two teeth (21) on the outer surface of two flexible tabs (22), said tabs (22) being in diametrically opposite positions, that is located in such a way that each one of them is in an intermediate position between two internal teeth (20). In other words, the tabs (22), from which the teeth (21) and respectively the internal radial teeth (20) of the tubular appendix (18) emerge towards the outside, are substantially developed according to two plains (F-F; E-E) orthogonal to each other.

Moreover, from the bottom of said appendix (18) there emerge two flexible tabs (23), oriented towards the longitudinal axis of the same appendix (18) and located in diametrically opposite positions, and two further tabs (24) which are oriented parallel to said longitudinal axis, are also located in diametrically opposite positions and are provided with a hook-shaped free end.

The surface of the lower base of said element (2) projects outside the corresponding side wall, forming a ring-shaped projection (25) which, as further described below, prevents the overturning of the body (1) during use.

The element (3) of said body (1) present two holes (26), corresponding to two diametrically opposite teeth (4), destined to be engaged by the teeth (21) of the first element (2) of the same body (1) in the assembly phase.

The device concerned is assembled as follows.

The lamp (6) is housed in the tube (18) making two grooves (27) of the respective dissipator (7) slide along the two internal teeth (20) of the same cylinder, overcoming the resistance offered by the tabs (23), until the dissipator is in position below the two hook-shaped ends provided by the tabs (24). In this way, the lamp (6) is perfectly blocked inside the tube (18), whatever the thickness of the respective dissipator (7). In other words, the system auto-adapts to the thickness of the dissipator (7), always keeping the lamp (6) in the desired position. Next, the lens (8) is positioned on the lamp (6), in such a way that the lens rests on the edge (19) of the tube (18). Then, the element (3) of the body (1) is fitted onto the cylindrical appendix (18) of the element (2), in such a way that to each groove (5), respectively each tooth (4), of the element (3) there corresponds a groove (5), respectively a tooth (4), of the element (2), and in such a way that each tooth (21) of the element (2) fits into a corresponding hole (26) in the element (3). In this way, also the lens (8) is blocked in the desired position, above the lamp (6). Then, the ring-shaped element (10) is placed in the hole (11) of the channel (9), in such a way that the edge (14) of the element (10) covers the external edge of the hole (11) and in such a way that the ridged side wall (13) of the same element is inside the channel (9). On the opposite side, that is inside the channel (9), is positioned the body (1) - assembled as described above - in such a way that each internal radial appendix (12) of the element (10) fits into a corresponding groove (5) in the body (1). Finally, the band (16) is pressed onto the ridged side wall (13) of the element (10), so that the openings (15) of the latter are closed. Since the axes of the appendices (12) intersect in the centre (P) of the body (1), the latter can orbit freely around that point, while the element (10) remains fixed in the assembly position. Consequently, also the lamp (6) and the respective beam of light can be oriented as desired (see Fig.29). The presence of the projection (25) on the lower base surface of the element (2) prevents the complete overturning of the body (1) since, when the same is turned into a position in which the projection (25) intercepts the band (16), any further inclination of the body (1) is prevented. If the lamp (6) and/or the lens (8) have to be replaced, it is sufficient to release the element (3) of the body (1) from the element (2), without necessarily having to remove also the ring (10) and the pressing band (15). In place of the lamp (6), the body (1) may contain or support any other object to be oriented according to a predetermined but variable position in space.

In practice the details of execution may vary, as may the shape, dimensions, the arrangement of the elements, or the nature of the materials used, without departing from the idea of the solution adopted and thus remaining within the limits of the protection afforded by the present patent.

## Claims

1. Swivel container support, comprising a fixed part (10) and a mobile part (1) **characterised in that** said fixed part (10) is composed of a ring-shaped element provided with several internal radial appendices (12) and **in that** said mobile part is composed of a body provided with a series of meridian teeth (4) and corresponding grooves (5) the bottom of which is defined by a corresponding portion or strip of spherical surface and destined to receive said radial appendices (12), the axes of the latter intersecting in a point (P) corresponding to the geometrical centre of said body (1) and said body (1) delimiting a housing or a support for an object destined to be oriented according to a desired position in space, the said ring shaped element (10) being moulded on a spherical seat, the internal shape of the said ring shaped element (10) corresponding to the external shape of the said mobile body (1).

2. Swivel container support according to claim 1 **characterised in that** said body (1) is made of two elements (2, 3).

3. Container support according to claim 1 **characterised in that** the external side surface of said ring (10) is provided with parallel circumferential ridges having a saw-toothed profile (13).

4. Swivel container support according to claim 1 **characterised in that** said ring (10) presents an upper ring-shaped edge (14) destined to rest on the edge of a corresponding hole (11) presented by a supporting element(9).

5. Swivel container support according to claim 1 **characterised in that** said ring-shaped element (10) is made of plastic material with the moulding technique and presents several shakeout openings (15) which, with the aid of a press-on closing band (16), close in the operative or using condition so that the side surface of the ring-shaped element (10) substantially assumes the shape of a spherical band.

6. Swivel container support according to claim 5 **characterised in that** the internal surface of said ring-shaped band (16) is internally provided with circumferential ridges (17).

7. Swivel container support according to claim 1 **characterised in that** said container body (1) presents an internal axial tubular element (18) provided with means for positioning and holding an object (6) to be placed in the body (1).

8. Swivel container support according to claim 7 **characterised in that** said tubular element (18) is provided with two internal radial teeth (20), located in diametrically opposite positions, which teeth (20) act as a guide for positioning said object (6).

9. Swivel container support according to claim 7 **characterised in that** said tubular element (18) is provided with two teeth (21) on the external surface of two flexible tabs (22), said tabs (22) being in diametrically opposite positions.

10. Swivel container support according to claim 7 **characterised in that** from the bottom of said tubular element (18) there emerge two flexible tabs (23), oriented towards the longitudinal axis of the same element (18) and located in diametrically opposite positions, and two further tabs (24) having a hook-shaped free end, oriented parallel to said longitudinal axis and also located in diametrically opposite positions.

11. Swivel container support according to claim 1 **characterised in that** the surface of the lower base of said body (1) projects outside the corresponding side wall, forming a ring-shaped projection (25).

12. Swivel container support according to claim 1 **characterised in that** said body (1) is made of two elements (2, 3), **in that** one of said two elements (2, 3) is provided with an internal axial tubular element (18) with two teeth (21) on the external surface of two flexible tabs (22), said tabs (22) being in diametrically opposite positions, and **in that** the other of said two elements (2, 3) presents two holes (26) into which said teeth (21) enter when the two elements (2, 3) are fitted together.

## Patentansprüche

1. Schwenkbare Trag- und Aufnahmevorrichtung, die einen festen Teil (10) und einen beweglichen Teil (1) umfasst, **dadurch gekennzeichnet, dass** der feststehende Teil (10) aus einem ringförmigen Element besteht, das mit mehreren inneren radialen Fortsätzen (12) versehen ist, und dass der bewegliche Teil aus einem Körper besteht, der mit einer Reihe von Meridianrippen (4) und entsprechenden Rillen (5) versehen ist, deren Boden von einem entsprechenden Teil oder Streifen einer kugeligen Oberfläche gebildet wird und die dazu bestimmt sind, die radialen Fortsätze (12) aufzunehmen, wobei die Achsen der letzteren sich in einem Punkt (P) schneiden, der dem geometrischen Zentrum des Körpers (1) entspricht, wobei der Körper (1) ein Gehäuse oder einen Träger für ein Objekt umschließt, dass dazu bestimmt ist, gemäß einer gewünschten Position im Raum ausgerichtet zu werden, wobei das ringförmige Element (10) an einem kugeligen Sitz angeformt ist, wobei die innere Form des ringförmigen Elementes (10) der äußeren Form des beweglichen Körpers (1) entspricht.

2. Schwenkbare Trag- und Aufnahmevorrichtung nach Anspruch 1, **dadurch gekennzeichnet, dass** der Körper (1) aus zwei Elementen (2,3) besteht.

3. Schwenkbare Trag- und Aufnahmevorrichtung nach Anspruch 1, **dadurch gekennzeichnet, dass** die äußere Seitenoberfläche des Rings (10) mit parallelen, in Umfangsrichtung verlaufenden Rippen versehen ist, die ein Sägezahnprofil (13) bilden.

4. Schwenkbare Trag- und Aufnahmevorrichtung nach Anspruch 1, **dadurch gekennzeichnet, dass** der Ring (10) einen oberen ringförmigen Rand (14) aufweist, der dazu bestimmt ist, auf dem Rand eines entsprechenden Loches (11) aufzuliegen, das an einem Tragelement (9) vorgesehen ist.

5. Schwenkbare Trag- und Aufnahmevorrichtung nach Anspruch 1, **dadurch gekennzeichnet, dass** das ringförmige Element (10) aus Kunststoff durch ein Gießverfahren hergestellt ist und mehrere Ausgleichsöffnungen (15) aufweist, die mit Hilfe eines angedrückten Verschlussbandes (16) im Betriebs- oder Verwendungszustand verschlossen sind, so dass die Seitenoberfläche des ringförmigen Elementes (10) im Wesentlichen die Form eines kugeligen Bandes annimmt.

6. Schwenkbare Trag- und Aufnahmevorrichtung nach Anspruch 5, **dadurch gekennzeichnet, dass** die innere Oberfläche des ringförmigen Bandes (16) innen mit in Umfangsrichtung verlaufenden Rippen (17) versehen ist.

7. Schwenkbare Trag- und Aufnahmevorrichtung nach Anspruch 1, **dadurch gekennzeichnet, dass** der Behälterkörper (1) ein inneres, axiales, rohrförmiges Element (18) aufweist, das mit Mitteln zum Positionieren und Halten eines Gegenstandes (6) versehen ist, der im Körper (1) angebracht werden soll.

8. Schwenkbare Trag- und Aufnahmevorrichtung nach Anspruch 7, **dadurch gekennzeichnet, dass** das rohrförmige Element (18) mit zwei inneren, radialen Zähnen (20) versehen ist, die an einander diametral gegenüberliegenden Stellen angeordnet sind, wobei diese Zähne (20) als Führung für das Positionieren des Gegenstandes (6) wirken.

9. Schwenkbare Trag- und Aufnahmevorrichtung nach Anspruch 7, **dadurch gekennzeichnet, dass** das rohrförmige Element (18) mit zwei Zähnen (21) auf der äußeren Oberfläche von zwei flexiblen Laschen (22) versehen ist, wobei sich die Laschen (22) an einander diametral gegenüberliegenden Stellen befinden.

10. Schwenkbare Trag- und Aufnahmevorrichtung nach Anspruch 7, **dadurch gekennzeichnet, dass** vom Boden des rohrförmigen Elementes (18) zwei flexible Laschen (23) ausgehen, die zur Längsachse des Elementes (18) hin ausgerichtet und an einander diametral gegenüberliegenden Stellen angeordnet sind, sowie zwei weitere Laschen (24), die ein hakenförmiges freies Ende besitzen, parallel zu besagter Längsachse ausgerichtet und ebenfalls an Stellen angeordnet sind, die einander diametral gegenüberliegen.

11. Schwenkbare Trag- und Aufnahmevorrichtung nach Anspruch 1, **dadurch gekennzeichnet, dass** die Oberfläche der unteren Basis des Körpers (1) über die entsprechende Seitenwand nach außen vorsteht und so einen ringförmigen Vorsprung (25) bildet.

12. Schwenkbare Trag- und Aufnahmevorrichtung nach Anspruch 1, **dadurch gekennzeichnet, dass** der Körper (1) aus zwei Elementen (2,3) besteht, dass das eine der beiden Elemente (2,3) mit einem internen, axialen, rohrförmigen Element (18) mit zwei Zähnen (21) auf der äußeren Oberfläche von zwei flexiblen Laschen (22) versehen ist, wobei die Laschen (22) sich an einander diametral gegenüberliegenden Stellen befinden, und dass das andere der beiden Elemente (2,3) zwei Löcher (26) aufweist, in welche die Zähne (21) eintreten, wenn die beiden Elemente (2,3) zusammengesetzt werden.

## Revendications

1. Support conteneur orientable, comprenant une partie fixe (10) et une partie mobile (1) **caractérisé en ce que** ladite partie fixe (10) est formée par un élément annulaire pourvu de plusieurs appendices radiales interne (12) et **en ce que** ladite partie mobile est formée par un corps pourvu d'une série de dents méridiennes (4) et par des gorges correspondantes (5) dont le fond est défini par une portion ou bande de surface sphérique correspondante et destinées à recevoir lesdites appendices radiales (12), les axes de ces dernières se croisent en un point (P) correspondant au centre géométrique dudit corps (1) et ledit corps (1) en délimitant un logement ou un support pour un objet destiné à être orienté selon un indexage souhaité dans l'espace, ledit élément annulaire (10) étant moulé sur un siège sphérique, et la forme interne dudit élément annulaire (10) étant correspondant à la forme externe dudit corps mobile (1.

2. Support conteneur selon la revendication 1 **caractérisé en ce que** ledit corps (1) est en deux éléments (2,3).

3. Support conteneur selon la revendication 1 **caractérisé en ce que** la surface latérale externe dudit anneau (10) est pourvue de rayures circulaires parallèles avec profil en dents de scie.

4. Support conteneur selon la revendication 1 **caractérisé en ce que** ledit anneau (10) présente un bord annulaire supérieur (14) destiné à résulter en appui sur le bord d'un trou correspondant (11) présenté par un élément de support (9).

5. Support conteneur selon la revendication 1 **caractérisé en ce que** ledit élément annulaire (10) est réalisé en matériel plastique par moulage et présente plusieurs ouvertures de démoulage (15) qui, avec l'aide d'une bande de fermeture à pression (16), en assiette opérationnelle ou d'emploie se renferment ainsi que la surface latérale de l'élément annulaire (10) prend fondamentalement la forme d'une bande sphérique.

6. Support conteneur selon la revendication 5 **caractérisé en ce que** ladite surface interne de ladite bande annulaire (16) est pourvue intérieurement de rayures circulaires (17).

7. Support conteneur selon la revendication 1 **caractérisé en ce que** ledit corps conteneur (1) présente un élément tubulaire axial interne (18) pourvu de moyens de positionnement et de retenue d'un objet (6) à placer dans le corps (1).

8. Support conteneur selon la revendication 7 **caractérisé en ce que** ledit élément tubulaire (18) est pourvu de deux dents radiaux internes (20), prévues en positions diamétralement opposées, lesquels dentes (20) servent de guidage pour le positionnement dudit objet (6).

9. Support conteneur selon la revendication 7 **caractérisé en ce que** ledit élément tubulaire (18) est pourvu de deux dents (21) sur la surface externe de deux longuette flexibles (22), lesdites longuettes (22) étant en positions diamétralement opposées.

10. Support conteneur selon la revendication 7 **caractérisé en ce que** du fond dudit élément tubulaire (18) émergent deux longuettes flexibles (23), orientées vers l'axe longitudinal du même élément (18) et prévues en positions diamétralement opposées, et deux autres longuettes (24) avec un ardillon d'extrémité, orientées parallèlement audit axe longitudinal et prévues en positions diamétralement opposées.

11. Support conteneur selon la revendication 1 **caractérisé en ce que** la surface de base inferieur dudit corps (1) émerge vers l'extérieur de la paroi latérale correspondante, en formant une saille annulaire (25).

12. Support conteneur selon la revendication 1 **caractérisé en ce que** ledit corps (1) est réalisé en deux éléments (2,3), **en ce que** un des dits deux éléments (2,3) est pourvu d'un élément tubulaire axial interne (18) pourvu de deux dents (21) sur la surface externe de deux longuette flexibles (22), lesdits longuette (22) étant en positions diamétralement opposées, et **en ce que** l'autre desdits deux éléments (2,3) présente deux trous (26) dans lesquels entrent lesdites dents (21) lorsque les deux éléments (2,3) sont couplés.
